# EUROPEAN PATENT SPECIFICATION

(11) **EP 2 430 909 B1**
(45) Date of publication and mention of the grant of the patent: **08.11.2017**
(21) Application number: 11182038.7
(22) Date of filing: 20.09.2011
(51) Int. Cl.: A01G 9/14, E04H 12/22

(54) **Greenhouse**
Gewächshaus
Serre

(30) Priority: 21.09.2010 NL 2005377
(43) Date of publication of application: 21.03.2012
(73) Proprietor: Beheer 141 B.V., 2681 TW Monster (NL)
(72) Inventor: Arensman, Ronnie, 2681 TW Monster (NL)
(74) Representative: Hooiveld, Arjen Jan Winfried

(56) References cited:
- WO-A1-2010/085148
- DE-U1-202008 004 967
- JP-A- 2008 095 362
- NL-C2- 1 036 738

## Description

The invention relates to a (Dutch-type) greenhouse comprising at least one gutter section and a roof extending from said gutter section, which gutter section is supported by at least one column, wherein said roof comprises a ridge section as well as spaced-apart glazing bars which are connected to an edge of the gutter section near one end and to the ridge section near the other end, and wherein roof elements are provided between adjacent glazing bars, being supported in rabbets formed in said glazing bars and in a rabbet of the gutter section.

It is noted that in practice the term "greenhouse" is generally understood to mean a hothouse suitable for cultivating vegetables, fruit or flowers and the lilke.

Such a greenhouse is generally known and is described in particular in Dutch patent publication No. 89.02603 (P.L.J. Bom Beheer B.V.). The greenhouse discussed therein is built up of columns, gutters of tubular cross-section supported by said columns, as well as an inclined roof extending between two gutters, said roof comprising a ridge section, glazing bars and panes. Said gutters and said glazing bars form structural elements that are to bear the weight of the roof and take up wind and snow loads. The columns are in turn fixed to foundation elements in the ground.

A general drawback of the greenhouse of the type as referred to in the introduction, including the greenhouse that is known from the aforesaid Dutch patent publication, is the following. It has become apparent in practice that the rigid connection between the columns and the foundation elements is vulnerable, in particular in the case of high (wind) loads. So far a solution to this problem has not been found.
The object of the invention is to overcome the above drawback of the prior art, in particular to provide a greenhouse in which a solid and durable connection is realised between the columns and the foundation elements.
In order to accomplish that object, a greenhouse of the kind referred to in the introduction is according to the invention characterized in that the column is pivotally connected to an elongated foundation element at least partially disposed in the ground, wherein the end of the column that faces towards the ground is provided between two wall sections positioned opposite each other, which wall sections extend upwards from an end of the foundation element that faces away from the ground, wherein said wall sections and said column are provided with coaxial holes for receiving a pivot pin therethrough, and wherein each wall section comprises flanged edges that engage the column. As a result, an optimum pivotability of the column relative to the foundation element is realised. The edges of the wall section in particular are in line contact with the column. In order to further improve the pivotability, the flanged edges narrow in the direction of towards the column. The contact with the column is preferably a point contact in that case.

Document D1 discloses a greenhouse in accordance with the preamble for original claim 1. Document D1 teaches the use of a tool or aid having a U-shaped cross-section. First, said tool is mounted on a foundation element, wherein said tool is positioned onto an anchor bolt, with the interposition of a resilient pivot aid, and wherein said tool is subsequently fixed onto said foundation element by screwing a nut onto said bolt. Secondly, a column is mounted over said tool, such that each leg of said U-shaped cross-section abuts an inner wall of said column. Third, a bolt is inserted through co-axial through holes of opposite walls of said column and legs of said U-shaped cross-section of said tool. Finally, a nut is screwed onto said bolt.

In a preferred embodiment of a greenhouse according to the invention, the wall sections and the foundation element are made in one piece, in particular of steel. The wall sections preferably extend in the longitudinal direction of the foundation element, so that the wall sections form an extension of walls of the foundation element.

In another preferred embodiment of a greenhouse according to the invention, the column is wider than the foundation elements. Edges of the end of the column that faces towards the ground are preferably spaced from the end of the foundation element that faces away from the ground.

The invention will now be explained in more detail with reference to figures illustrated in a drawing, in which:
- Figure 1 is a schematic, perspective view of a standard "Venlo-type" greenhouse; and
- Figure 2 shows a detail of figure 1, showing a preferred variant of a pivotable connection between the column and the foundation element.

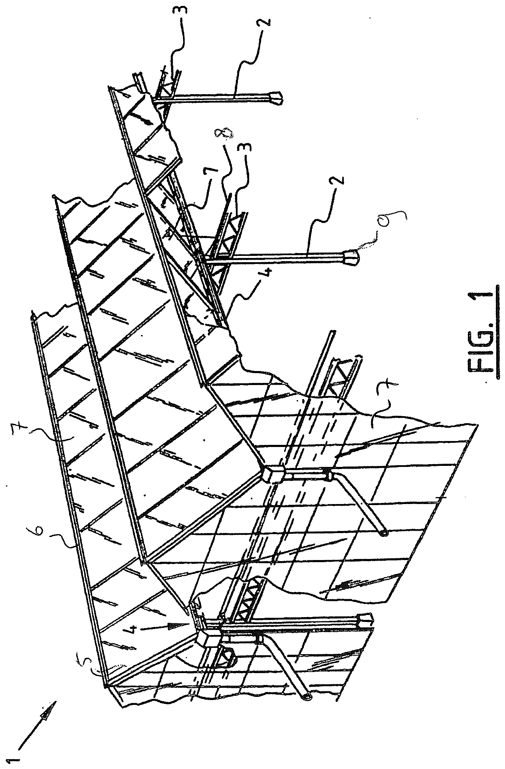

Figure 1 shows a "Venlo-type" greenhouse comprising a supporting structure with vertical columns 2 and horizontal girders 3 that connect the columns 3 together. The supporting structure supports a roof structure comprising roof gutters 4 and roof trusses 5 which extend toward a ridge 6. The roof structure and the supporting structure are provided with windows 7 for admitting daylight. Various driving devices may be provided at the top of the greenhouse 1, for example a driving device 8 for opening and closing the windows 7. Furthermore, a driving device (not shown) may be provided for operating a screen (not shown) mounted at the top of the greenhouse for protecting crops being grown in the greenhouse 1 against fierce sunlight and reducing any heat losses via the roof structure as much as possible. The columns 2 are in turn connected to foundation piles 9, which foundation piles 9 partially extend above the ground.

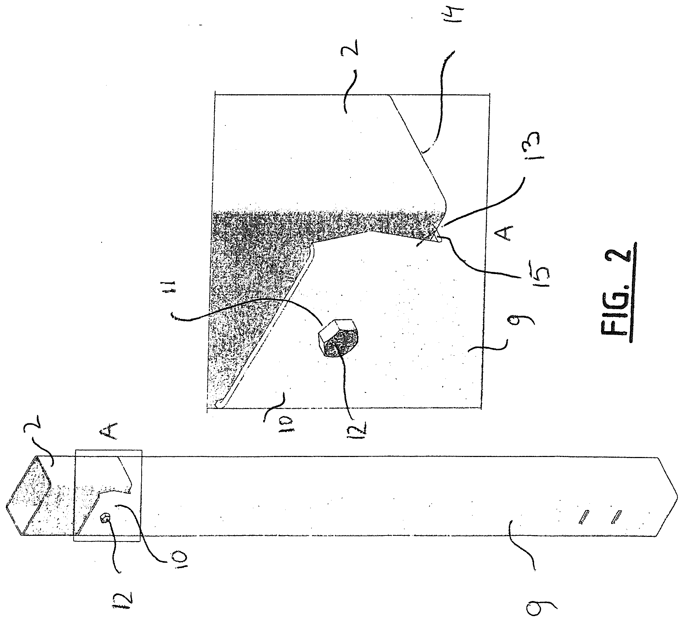

With reference to figure 2, there is (partially) shown a column 2, which column 2 is according to the invention pivotally connected to an elongated foundation element or foundation pile 9 to be provided at least partially in the ground. The foundation pile 9 is made in one piece of steel, whilst wall sections 10 extend in longitudinal direction away from the foundation pile 9. As figure 2 shows, the column is provided, with its end facing the ground, between the two wall sections 10 that are positioned opposite each other. The wall sections 10 and the column 2 are provided with coaxial holes 11, through which a pivot pin 12 is passed, so that the column 2 can pivot about the pivot axis thus formed. Each wall section 10 has flanged edges 13, which engage the column 2. The flanged edges 13 narrow in the direction of the column 2, as a result of which the flanged edges 13 engage (walls of) the column 2 in a point contact.

As figure 2 shows, the column 2 is wider than the foundation pile 9, with edges 14 of the end of the column that faces the ground being spaced from edges 15 of the end of the foundation pile 9 that faces away from the ground.

It is noted that the invention is not limited to the embodiment shown herein, but that it also extends to other variants that fall within the scope of the appended claims.

## Claims

1. A greenhouse (1) comprising at least one gutter section and a roof extending from said gutter section (4), which gutter section (4) is supported by at least one column (2), wherein said roof comprises a ridge section (6) as well as spaced-apart glazing bars which are connected to an edge of the gutter section (4) near one end and to the ridge section (6) near the other end, and wherein roof elements (7) are provided between adjacent glazing bars, being supported in rabbets formed in said glazing bars and in a rabbet of the gutter section (4), **characterised in that** the column (2) is pivotally connected to an elongated foundation element (9) at least partially disposed in the ground, wherein the end of the column that faces towards the ground is provided between two wall sections (10) positioned opposite each other, which wall sections (10) extend upwards from an end of the foundation element (9) that faces away from the ground, wherein said wall sections (10) and said column (2) are provided with coaxial holes (11) for receiving a pivot pin (12) therethrough, and wherein each wall section (10) comprises flanged edges (13) that engage the column.

2. A greenhouse (1) according to claim 1, wherein said flanged edges (13) narrow in the direction of the column (2).

3. A greenhouse (1) according to claim 1 or 2, wherein the wall sections (10) and the foundation element (9) are made in one piece.

4. A greenhouse (1) according to claim 3, wherein the wall sections (10) extend in the longitudinal direction of the foundation element (9).

5. A greenhouse (1) according to any one of the preceding claims 1 - 4, wherein the foundation element (9) is made of steel.

6. A greenhouse (1) according to claims 3 and 5, wherein the wall sections (10) are cut out by means of a laser.

7. A greenhouse (1) according to any one of the preceding claims 1 - 6, wherein the column (4) is wider than the foundation elements (9).

8. A greenhouse (1) according to any one of the preceding claims 1 - 7, wherein edges (14) of the end of the column that faces towards the ground are spaced from edges (15) of the end of the foundation element (9) that faces away from the ground.

## Patentansprüche

1. Gewächshaus (1), das wenigstens einen Dachrinnenabschnitt und ein Dach, das sich von dem Dachrinnenabschnitt (4) erstreckt, aufweist, wobei der Dachrinnenabschnitt (4) von wenigstens einer Säule (2) gehalten wird, wobei das Dach einen Firstabschnitt (6) ebenso wie beabstandete Fenstersprossen aufweist, die in der Nähe eines Endes mit einem Rand des Dachrinnenabschnitts (4) und in der Nähe des anderen Endes mit dem Firstabschnitt (6) verbunden sind, und wobei Dachelemente (7) zwischen benachbarten Fenstersprossen bereitgestellt sind, die in Nuten, die in den Sprossen bereitgestellt sind, und in einer Nut des Dachrinnenabschnitts (4) gehalten werden, **dadurch gekennzeichnet, dass** die Säule (2) schwenkbar mit einem länglichen Sockelelement (9) verbunden ist, das wenigstens teilweise in dem Boden angeordnet ist, wobei das Ende der Säule, das in Richtung des Bodens gewandt ist, zwischen zwei zueinander entgegengesetzt positionierten Wandabschnitten (10) bereitgestellt ist, wobei die Wandabschnitte (10) sich von einem Ende des Sockelelements (9), das von dem Boden abgewandt ist, aufwärts erstrecken, wobei die Wandabschnitte (10) und die Säule (2) mit koaxialen Löchern (11) zum Aufnehmen eines Gelenkstifts hindurch versehen sind, und wobei jeder Wandabschnitt (10) Flanschränder (13) aufweist, die in die Säule eingreifen.

2. Gewächshaus (1) nach Anspruch 1, wobei die Flanschränder (13) sich in der Richtung der Säule (2) verengen.

3. Gewächshaus (1) nach Anspruch 1 oder 2, wobei die Wandabschnitte (10) und das Sockelelement (9) in einem Stück gefertigt sind.

4. Gewächshaus (1) nach Anspruch 3, wobei die Wandabschnitte (10) sich in der Längsrichtung des Sockelelements (9) erstrecken.

5. Gewächshaus (1) nach einem der vorhergehenden Ansprüche 1 - 4, wobei das Sockelelement (9) aus Stahl hergestellt ist.

6. Gewächshaus (1) nach einem der Ansprüche 3 und 5, wobei die Wandabschnitte (10) mittels eines Lasers ausgeschnitten sind.

7. Gewächshaus (1) nach einem der Ansprüche 1 - 6, wobei die Säule (4) breiter als die Sockelelemente (9) ist.

8. Gewächshaus (1) nach einem der Ansprüche 1 - 7, wobei Ränder (14) des Endes der Säule, das in Richtung des Bodens gewandt ist, von Rändern (15) des Endes des Sockelelements (9), das vom Boden abgewandt ist, beabstandet sind.

## Revendications

1. Serre (1) comprenant au moins une section gouttière et un toit s'étendant depuis ladite section gouttière (4), laquelle section gouttière (4) est supportée par au moins une colonne (2),
dans laquelle ledit toit comprend une section faîte (6) ainsi que des petits bois espacés qui sont reliés à un bord de la section gouttière (4) à proximité d'une extrémité et à la section faîte (6) à proximité de l'autre extrémité, et dans laquelle des éléments toit (7) sont prévus entre des petits bois adjacents, étant supportés dans des feuillures formées dans lesdits petits bois et dans une feuillure de la section gouttière (4), **caractérisée en ce que** la colonne (2) est reliée de manière pivotante à un élément de fondations (9) allongé, au moins partiellement disposé dans le sol, dans laquelle l'extrémité de la colonne qui est orientée vers le sol est prévue entre deux sections de murs (10) disposées à l'opposé l'une de l'autre, lesquelles sections de murs (10) s'étendent vers le haut depuis une extrémité de l'élément de fondations (9) qui est orientée à l'opposé du sol, dans laquelle lesdites sections de murs (10) et ladite colonne (2) sont dotées de trous coaxiaux (11) pour recevoir un axe de pivotement (12) à travers elles, et dans laquelle chaque section de mur (10) comprend des rebords (13) qui reçoivent la colonne.

2. Serre (1) selon la revendication 1, dans laquelle lesdits rebords (13) se rétrécissent dans la direction de la colonne (2).

3. Serre (1) selon la revendication 1 ou 2, dans laquelle les sections de murs (10) et l'élément de fondations (9) sont faits d'une seule pièce.

4. Serre (1) selon la revendication 3, dans laquelle les sections de murs (10) s'étendent dans la direction longitudinale de l'élément de fondations (9).

5. Serre (1) selon l'une quelconque des revendications précédentes 1 à 4, dans laquelle l'élément de fondations (9) est fait d'acier.

6. Serre (1) selon les revendications 3 et 5, dans laquelle les sections de murs (10) sont découpées au moyen d'un laser.

7. Serre (1) selon l'une quelconque des revendications précédentes 1 à 6, dans laquelle la colonne (4) est plus large que les éléments de fondations (9).

8. Serre (1) selon l'une quelconque des revendications précédentes 1 à 7, dans laquelle des bords (14) de l'extrémité de la colonne qui sont orientés vers le sol sont espacés des bords (15) de l'extrémité de l'élément de fondations (9) qui sont orientés à l'opposé du sol.
